# EUROPEAN PATENT APPLICATION

(11) **EP 4 606 830 A1**
(43) Date of publication of application: **27.08.2025**
(21) Application number: 24305283.4
(22) Date of filing: 20.02.2024
(51) Int. Cl.: C08G 18/10, C08G 18/48, C08G 18/76, C09J 175/04, C08K 3/016, C08K 3/32

(54) **POLYURETHANE ADHESIVE COMPOSITION COMPRISING A FLAME RETARDANT PACKAGE**

(71) Applicant: ARKEMA FRANCE, 92800 Puteaux (FR)
(72) Inventor: PATIL, Vishal B., Columbus, 43223 (US); WANG, Xianping, Columbus, 43223 (US); LI, Yufang C., Dublin, 43017 (US)
(74) Representative: Bandpay & Greuter

(57) **Abstract**

A polyurethane adhesive composition comprising a flame retardant package, wherein the flame retardant package comprises no more than about 20 wt% of the polyurethane adhesive composition. The flame retardant package comprises a liquid phosphate ester, based on the weight of the composition the liquid phosphate ester comprises no more than about 15 wt%, and a solid ammonium polyphosphate, the solid ammonium polyphosphate comprising "n" number of ammonium phosphate units wherein "n" comprises at least about 500.

The composition comprises a polyisocyanate component and a polyol component and a molar ratio of the polyisocyanate component to the polyol component comprises more than about 1: 1.

An advantageous application of the adhesive composition is a structural adhesive, preferably for one or more wood substrates or to produce an engineered wood article.

## Description

### FIELD OF THE INVENTION

The presently disclosed process(es), procedure(s), method(s), product(s), result(s), and/or concept(s) (collectively referred to hereinafter as the "present disclosure") relates generally to a polyurethane adhesive composition having a flame-retardant package, applications for the composition and a method of bonding different or similar substrates by using the adhesive composition.

### BACKGROUND OF THE INVENTION

Structural adhesives are typically used for strong and robust structural bonding in industrial applications. Structural wood adhesives play a very significant role in the efficient utilization of wood resources. For thousands of years, wood has been bonded by using natural adhesives (bio-adhesives). In the 20^{th} century, synthetic adhesives gradually took over because they were more effective, low-cost and had better adjustable properties. Synthetic wood adhesives are based on four main synthetic thermosetting resins: phenol formaldehyde (PF), urea formaldehyde (UF), melamine-formaldehyde (MF) and polymeric diphenylmethane diisocyanate (pMDI) resins. The formaldehyde-based wood adhesives are typically allied with formaldehyde emissions. Thus, concern about formaldehyde emissions from engineered wood products, especially in indoor applications has been an important driving factor for safe adhesive systems. Introduction of polyurethane based adhesive systems have proven to provide a reliable alternative to these formaldehyde-based wood adhesives. No formaldehyde emissions, solvent free and fast curing at room temperature are some of the reasons, the polyurethane based adhesives have continuously experienced increasing acceptance and demand in the structural wood adhesives industry. Further, the polyurethane based structural wood adhesives offer a unique characteristic because of the wide variation in physical properties that can be achieved by modifying their formulation.

The polyurethane-adhesives are available as 1 and 2 component adhesives. The most promising ones are 1 component polyurethane adhesives (1C-PUR). The first 1C-PUR adhesives that entered the engineered wood timber market was PURBOND HB 110 (Purbond AG/Switzerland). 1C-PUR adhesives have captured a large market share as they offer several benefits to the traditional adhesives systems such as no prior mixing, reduced press time, fast bonding at room temperature, ductile and invisible bond line and the like. Nevertheless, there are still obstacles that impede a more extended use of 1C-PUR such as performance of 1C-PUR bonded wood under high thermal loads and under high moisture load. The resistance against moisture and heat remains as one of the major issues preventing 1C-PUR from being used for structural bonding of wood at a large scale.

United States Patent No. 9649826 teaches an adhesive system for preparing lignocellulosic composites. The adhesive system comprises an aqueous primer composition and a polyurethane adhesive composition. The aqueous primer composition consists of water, up to 10 wt.% of surfactant, from 0 to 25 wt.% of a polyol having a molecular weight less than 5000 Daltons and from 0 to 10 wt.% of a co-solvent. The polyols include water soluble polyols, water dispersible polyols, or water emulsifiable polyols. Similarly, the surfactants include water soluble surfactants or water emulsifiable surfactants.

Similarly, United States Patent Publication No. 20160168435 teaches an adhesive system comprised of a primer composition and a polyurethane adhesive composition for preparing lignocellulosic composites. The primer composition is mainly comprised of polyalkylene glycols, polyalkylene glycol mono-ethers and polyalkylene glycol di-ethers having a hydroxyl number of less than or equal to 30 mg KOH/g. The primer composition may further comprise surfactants chosen from siloxane-based surfactants; alkyl polyglucosides; alkoxylated fatty acids; alkoxylated alcohols; alkylsulfosuccinates; acetylenic diols; and mixtures thereof.

United States Patent No. 8829122 teaches impact strength modifiers obtained by reaction of amphiphilic block copolymers. These impact strength modifiers are suitable for use in heat-curing epoxy resin adhesives.

Similarly, United States Patent No. 8969511 describes special polyether block copolymers and compositions, particularly polyurethanes derived therefrom. The compositions are well suited as a reactive hot melt adhesive and/or coatings substance.

United States Patent Publication No. 20040109853 teaches about biological molecules such as proteins as components of coatings and paints comprising a biomolecule composition.

A flame retardant adhesive composition for structural wood bonding is disclosed in PCT/EP2022/051298. The '298 application discloses a 1C-PUR flame retardant adhesive composition comprising a reactive polyurethane prepolymer and the use of the adhesive composition for the structural bonding of wood substrates.

Heat resistant structural wood adhesive compositions involving polymeric diphenylmethane diisocyanate (polymeric MDI or pMDI, also called polymeric methylene diisocyanate in the present text), polyol, and aromatic polyols are disclosed in EP2547743B1. This patent describes an adhesive composition that forms the basis of a heat-resistant, fire resistant, and water resistant polyurethane adhesive suitable for applications in the manufacture of wood products, and the method of making the adhesive. The wood finger-jointed studs produced using an adhesive derived from this patent are reported to meet or exceed the fire rating of a period of 60 minutes according to ASTM E 119 and ASTM D 7374. The patent teaches the heat resistance of the adhesive is a result of incorporating thermally stable aromatic polyol molecules into the polymeric structures of the wood adhesive system, which is composed of the reaction products of a poly(methylene diphenyl diisocyanate), at least one of a polyether polyol and a polyester polyol; and the aromatic polyol that is a hydroxyl phenol in a preferred embodiment.

From the above it is evident polyurethane adhesives have been used in wood bonding applications for quite some time. They are gaining more traction in last few years compared to phenolic or amino based adhesives because of no formaldehyde emissions, simplicity of application, room temperature cure and natural wood color bond lines. However, they do not have favorable heat or flame resistance properties as phenolic or amino resin based adhesives. Under fire conditions, urethane adhesives will degrade slowly, cause debonding and can lead to catastrophic failures in structural applications.

### BRIEF DESCRIPTION

In an embodiment, the present disclosure provides a polyurethane adhesive composition comprising a flame retardant package, wherein the flame retardant package comprises no more than about 20 wt% of the composition, preferably no more than about 15 wt%, more preferably no more than about 10 wt% (said polyurethane adhesive composition being also called "flame retardant adhesive composition" or "flame retardant composition" or "adhesive composition" in the present text). Preferably the flame retardant package comprises a liquid phosphate ester, based on the weight of the composition, the composition includes no more than about 15 wt% of the liquid phosphate ester, preferably less than about 10 wt%, more preferably no more than about 5 wt%, further preferably no more than about 4 wt%, even more preferred no more than about 3 wt%, The flame retardant package may also include a solid ammonium polyphosphate, the solid ammonium polyphosphate comprising "n" number of ammonium phosphate units wherein "n" comprises at least about 500, further preferably at least about 750, more preferably at least about 1000, even more preferably at least about 1500. The composition also comprises a polyisocyanate component and a polyol component and a molar ratio of polyisocyanate component to polyol component comprises more than about 1:1, preferably at least about 2:1, further preferably at least about 5:1, even more preferably at least about 10:1, and most preferably up to about 20:1.

In another embodiment, the present disclosure provides a laminate comprising 2 wood substrates and the cured polyurethane adhesive composition as stated above adhering the 2 wood substrates together. Preferably at least one of the 2 wood substrates comprises a structural substrate, more preferably both of the 2 wood substrates comprises a structural substrate.

In yet another embodiment, the present disclosure provides a method of bonding a first substrate and a second substrate, comprising (i) providing a first substrate having at least one surface and a second substrate having at least one surface, wherein the first substrate comprises a lignocellulosic substrate and the second substrate comprises a lignocellulosic substrate or a non-lignocellulosic substrate, (ii) applying the above described polyurethane adhesive composition to the surface of one of the first substrate or the second substrate or to both the first and second substrates, (iii) sandwiching the composition between the first substrate and the second substrate; and (vi) curing the adhesive composition at a pressure of at least about 15 psi, preferably up to about 300 psi, more preferably up to about 200 psi, and for a time period of at least about 5 min.

Embodiments disclosed herein may also include a flame retardant package comprising a liquid phosphate ester, preferably a liquid polymeric phosphate ester, (e.g., Daiguard 770) and solid ammonium polyphosphate (e.g. Exolit^{®} AP 422). A weight ratio of liquid polymeric phosphate ester to solid ammonium polyphosphate may comprises about 10:1 to about 1:6. Optionally, the flame retardant package may consist of the liquid polymeric phosphate ester and the solid ammonium polyphosphate.

In an embodiment, the flame retardant adhesive composition may contain polymeric MDI with high 4,4' MDI content.

In another embodiment, the flame retardant composition comprises a 5% to 25% NCO content, preferably between 10% to 22%.

Optionally, the flame retardant composition may include other flame retardants such as, but not limited to, zinc borate, melamine polyphosphate, bromine based flame retardants, chlorine based flame retardants and combinations thereof.

Embodiments disclosed herein relate to formulating polyurethane adhesive compositions which exhibit excellent flame retardant performance for structural wood bonding application. It may include a liquid polymeric phosphate ester based flame retardant which is used in combination with solid flame retardant ammonium polyphosphate. Preferred examples of loading rates of these flame retardants may be between about 0.1 to 7 wt%, preferably about 0.5 to 5 wt% of the polyurethane adhesive composition.

Embodiments of another composition included herein is a two-component polyurethane adhesive composition (also known as a two-part adhesive composition) which includes an NCO prepolymer comprising the reaction product of an isocyanate compound and a polyol, preferably a NCO% of the prepolymer comprises up to about 30%, more preferably from about 1 to 20%, even more preferably less than about 20% to at least about 10% or from about 1 to 10%. A second component of the composition includes a second polyol, preferably having a number average molecular weight of at least about 2,000 Daltons, more preferably at least about 4,000 Daltons, even more preferably at least about 8,000 Daltons and most preferably more than 10,000 Daltons. Another constituent comprises a flame retardant package, wherein the flame retardant package comprises no more than about 20 wt% of the composition, preferably no more than about 15 wt%, more preferably no more than about 10wt%. The flame retardant package may include no more than about 15 wt% of a liquid phosphate ester based on the weight of the composition, preferably less than about 10 wt% of the liquid phosphate ester, more preferably no more than about 5 wt% of the liquid phosphate ester, further preferably no more than about 4 wt% of the liquid phosphate ester, even more preferred no more than about 3 wt% of the liquid phosphate ester, and a solid ammonium polyphosphate, said solid ammonium polyphosphate comprising "n" number of ammonium phosphate units wherein "n" comprises at least about 500, further preferably at least about 750, more preferably at least about 1000, even more preferably at least about 1500.

The two-component adhesive composition may or may not include a silane adhesion promoter selected from the group comprising an isocyanurato silane adhesion promoter, an isocyanato silane adhesion promoter and combinations thereof, when present, a concentration of the silane adhesion promoter comprises about 0.1 to 10 wt% of the two-component polyurethane adhesive composition, (non-limiting example of the isocyanurato silane: 1,3,5-tris[3-(trimethoxysilyl)propyl]-1,3,5-triazine-2,4,6(1H,3H,SH)-trione). Other optional components may include an epoxy functional silane adhesion promoter. Alternatively, the 2-component adhesive composition may include less than 0.1 wt% (based on the weight of the two-component polyurethane adhesive composition) of the silane adhesion promoter selected from the group comprising the isocyanurato silane adhesion promoter, the isocyanato silane adhesion promoter and combinations thereof, preferably less than about 0.05 wt%, more preferably less than about trace amounts, further preferably may be devoid of the silane adhesion promoter and/or may include less than 0.5 wt% (based on the weight of the two-component polyurethane adhesive composition) of an epoxy functional silane adhesion promoter, preferably less than about 0.1 wt%, further preferably less than about 0.05 wt% of the epoxy functional silane adhesion promoter, more preferably no more than about trace amounts of the epoxy functional silane adhesion promoter.

Preferred properties of the two-component adhesive (when cured) may include one or more of the following: (a) preferably a tensile strength of the adhesive comprises at least about 1 MPa, more preferably at least about 5 MPa, even more preferably at least about 7 MPa, even more preferably at least about 10 MPa; (b) Young's modulus of at least about 1 MPa, (c) a NCO to OH index of at least about 80 to 130, preferably at least about 100, more preferably at least about 110 and further preferably not more than about 125; and (d) combinations thereof.

### DESCRIPTION OF THE INVENTION

Before explaining at least one embodiment of the inventive concept(s) in detail by way of exemplary drawings, experimentation, results, and laboratory procedures, it is to be understood that the inventive concept(s) is not limited in its application to the details of construction and the arrangement of the components set forth in the following description or illustrated in the drawings, experimentation and/or results. The inventive concept(s) is/are capable of other embodiments or of being practiced or carried out in various ways. As such, the language used herein is intended to be given the broadest possible scope and meaning; and the embodiments are meant to be exemplary - not exhaustive. Also, it is to be understood that the phraseology and terminology employed herein is for the purpose of description and should not be regarded as limiting.

Unless otherwise defined herein, scientific and technical terms used in connection with the present disclosure shall have the meanings that are commonly understood by those of ordinary skill in the art. Further, unless otherwise required by context, singular terms shall include pluralities and plural terms shall include the singular. Generally, nomenclatures utilized in connection with, and techniques of chemistry described herein are those well-known and commonly used in the art. Reactions and purification techniques are performed according to manufacturer's specifications or as commonly accomplished in the art or as described herein.

All patents, published patent applications, and non-patent publications mentioned in the specification are indicative of the level of skill of those skilled in the art to which this present disclosure pertains. All patents, published patent applications, and non-patent publications referenced in any portion of this application are herein expressly incorporated by reference in their entirety to the same extent as if each individual patent or publication was specifically and individually indicated to be incorporated by reference.

All of the compositions and/or methods disclosed and claimed herein can be made and executed without undue experimentation in light of the present disclosure. While the compositions and methods of this invention have been described in terms of preferred embodiments, it will be apparent to those of skill in the art that variations may be applied to the compositions and/or methods and in the steps or in the sequence of steps of the method described herein without departing from the concept, spirit and scope of the invention. All such similar substitutes and modifications apparent to those skilled in the art are deemed to be within the spirit, scope and concept of the inventive concept(s) as defined by the appended claims.

As utilized in accordance with the present disclosure, the following terms, unless otherwise indicated, shall be understood to have the following meanings:

The use of the word "a" or "an" when used in conjunction with the term "comprising" in the claims and/or the specification may mean "one," but it is also consistent with the meaning of "one or more," "at least one," and "one or more than one." The use of the term "or" in the claims is used to mean "and/or" unless explicitly indicated to refer to alternatives only or the alternatives are mutually exclusive, although the disclosure supports a definition that refers to only alternatives and "and/or." Throughout this application, the term "about" is used to indicate that a value includes the inherent variation of error for the device, the method being employed to determine the value, and/or the variation that exists among the study subjects. The use of the term "at least one" will be understood to include one as well as any quantity more than one, including but not limited to, 2, 3, 4, 5, 10, 15, 20, 30, 40, 50, 100, etc. The term "at least one" may extend up to 100 or 1000 or more, depending on the term to which it is attached; in addition, the quantities of 100/1000 are not to be considered limiting, as higher limits may also produce satisfactory results. In addition, the use of the term "at least one of X, Y and(/or) Z" will be understood to include X alone, Y alone, and Z alone, as well as any combination of X, Y and Z.

As used in this specification and claim(s), the words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The term "or combinations thereof' as used herein refers to all permutations and combinations of the listed items preceding the term. For example, "A, B, C, or combinations thereof' is intended to include at least one of: A, B, C, AB, AC, BC, or ABC, and if order is important in a particular context, also BA, CA, CB, CBA, BCA, ACB, BAC, or CAB. Continuing with this example, expressly included are combinations that contain repeats of one or more item or term, such as BB, AAA, MB, BBC, AAABCCCC, CBBAAA, CABABB, and so forth. The skilled artisan will understand that typically there is no limit on the number of items or terms in any combination, unless otherwise apparent from the context.

As used herein, the term "amphiphilic block copolymer" means a copolymer characterized by a hydrophilic block that is chemically tethered to a hydrophobic block. The amphiphilic block copolymer can be a multiblock copolymer. Suitable and non-limiting examples of such amphiphilic multiblock copolymers can include a di-block, a triblock, a tetrablock copolymer and the like.

The term "monomer" refers to a small molecule that chemically bonds during polymerization to one or more monomers of the same or different kind to form a polymer.

The term "polymer" refers to a large molecule comprising one or more types of monomer residues (repeating units) connected by covalent chemical bonds. By this definition, polymer encompasses compounds wherein the number of monomer units may range from very few, which more commonly may be called as oligomers, to very many.

Reference herein to the wt% of the composition, the adhesive composition is meant to be inclusive of the entire composition unless states otherwise. In the case of a one-component polyurethane adhesive composition, the wt% based on all of components unless stated otherwise. In the case of two-component polyurethane adhesive composition the wt% is based on both the prepolymer and the curative (i.e. the two parts of the composition) unless otherwise stated.

Unless otherwise stated, standards mentioned throughout the present application are those in effect on the date the application is filed. Samples of methods that may be used to determine properties are listed below. However, the methods may be equally applicable, and the claims are not limited to the method below unless stated in the claim.

Methods that may be used to determine number average molecular weight include but are not limited to Gel Permeation Chromatography (GPC), Vapor Phase Osmometry, Membrane Osmometry and Lowering of Vapor Pressure.

NCO%: One technique to determine the NCO% is ASTM D5155. Determining the NCO% is not necessarily limited to the aforementioned technique. Unless stated otherwise NCO% is the wt% of the free NCO in the prepolymer.

NCO Index (or NCO to OH index) is the equivalence ratios of the isocyanates to polyols containing a hydroxyl group.

Viscosity: Unless otherwise stated, the viscosity was measured using a Brookfield viscometer with a number 6 spindle at 20 rpm at room temperature (20-25°C). An alternate apparatus to measure viscosity is a TA Instruments Discovery HR-1 rheometer with a cone-plate. The cone-plate may have a diameter of 40 mm. A typical measuring temperature is 23°C and a typical shear rate is 0.79 1/s.

Tensile Strength of the Adhesive: The tensile strength may be determined in accordance with ASTM D-638. The embodiments disclosed herein are no limited to determining tensile strength by the aforementioned ASTM standard.

Young's Modulus: While any suitable method or equipment may be used to determine the Young's modulus discussed herein one example equipment that may be used to measure the modulus is a LMEC-1 Young's Modulus Apparatus.

The flame retardant performance reported herein may be measured in accordance with flame testing CSA O177-06 Annex A.2 (Sections 2.1.7 and 3.7 of ANSI 405) conducted using CLT sample configuration.

Hydroxyl Number: The OH number may be determined by ASTM D4274 Standard Test Methods for Testing Polyurethane Raw Materials: Determination of Hydroxyl Numbers of Polyols. How to determine the OH number is not limited to the aforementioned ASTM standard. Types of titration methods may also be suitable.

The isomer ratio of the polyisocyanate component or isocyanate compound may be measured via liquid chromatography/triple quadrupole tandem mass spectrometry (LC-QQQ) method.

By way of example unless otherwise stated, the meaning of "about X", it is intended to mean "more or less 10% the value of X".

In the context of the invention, the ranges of values are understood to be inclusive. For example, the range "between 0% and 25%" includes, in particular, the values 0% and 25%.

As used herein, the term "lignocellulosic substrate" means a substrate made from woody materials such as cellulose or lignin. Further, the woody material can be a softwood or a hardwood. Suitable examples of such lignocellulosic substrates can include, but are not limited to, solid lumber, wood particle board, wood chipboard, wood-oriented strand board, waferboard, wood fiberboard, parallel strand lumber, laminated strand lumber, plywood, laminated veneer lumber, straw particle board or straw fiberboard.

In the present text, the term "trace amounts" preferably means an amount of at most 0.02 wt %, for example at most 0.01 wt%. In some cases, "less than trace amounts" may mean 0 wt%.

In one aspect, the present disclosure provides an adhesive comprising a flame retardant package, in particular a structural adhesive. An embodiment of the adhesive (for example of the structural adhesive) comprises a polyurethane adhesive composition. The composition comprises a flame retardant package, wherein the flame retardant package comprises no more than about 20 wt% of the composition, preferably no more than about 15 wt%, more preferably no more than about 10 wt%. Preferably the flame retardant package comprises a liquid phosphate ester, based on the weight of the composition having no more than about 15 wt% of the liquid phosphate ester, preferably less than about 10 wt%, more preferably no more than about 5 wt%, further preferably no more than about 4 wt%, even more preferred no more than about 3 wt%. The flame retardant package may comprise a solid ammonium polyphosphate. The solid ammonium polyphosphate may also comprise "n" number of ammonium phosphate units wherein "n" comprises at least about 500, further preferably at least about 750, more preferably at least about 1000, even more preferably at least about 1500. Examples of suitable number of ammonium phosphate units may include at least about 2000, at least about 2500 and up to about 5000, such as from 2000 to 5000 or from 2500 to 5000. Optionally, the flame retardant package comprises no more than about 7 wt% of the composition, preferably no more than about 5 wt%.

The composition may further comprise a polyisocyanate component and a polyol component and a molar ratio of the polyisocyanate component to the polyol component comprises more than about 1:1, preferably at least about 2:1, further preferably at least about 5:1, even more preferably at least about 10:1, and most preferably up to about 20:1 (such as from 1:1 to 20:1, preferably 2:1 to 20:1, further preferably 5:1 to 20:1, more preferably 10:1 to 20:1).

In one preferred embodiment the liquid phosphate ester may comprises a polymer.

In another embodiment the polyurethane adhesive composition comprises polymeric MDI, preferably the polymeric MDI comprises a 4, 4' isomeric content of at least about 20 wt% of the polyisocyanate component, more preferably at least about 25 wt%, further preferably at least about 30 wt%, even more preferably at least about 35 wt%, and most preferably at least about 40 wt%.

In another embodiment the polyisocyanate component/ isocyanate compound may comprise a polymeric methylene diisocyanate (pMDI) having an isomer ratio of 4, 4' to 2, 4' of at least about 2:1, preferably at least about 3:1, more preferably at least about 4:1, even more preferably at least about 6:1, further preferably at least about 8:1, further more preferably at least about 10:1 and even further preferably at least about 12:1. An upper limit of the ratio may comprises up to about 20:1. In particular, the isomer ratio of 4, 4' to 2, 4' of the polymeric methylene diisocyanate may be 2:1 to 20:1, preferably 3:1 to 20:1, more preferably 4:1 to 20:1, even more preferably 6:1 to 20:1, further preferably 8:1 to 20:1, such as 10:1 to 20:1, or 12:1 to 20:1.

In a further embodiment of the polyurethane adhesive composition the polyisocyanate component may comprise more than about 35 wt% polymeric MDI (pMDI) based on the weight of the polyisocyanate component, preferably at least about 40 wt%, more preferably up to about 50 wt% (such as from more than about 35 wt% to about 50 wt%, or from about 40 wt% to about 50 wt%); or about 35 wt% to about 75 wt%, more preferably about 60 wt% to less than about 75%, and/or preferably a monomeric MDI content of the polyisocyanate component may comprise less than about 45 wt% to the polyisocyanate component, more preferably less than about 40 wt%, further preferably less than about 35 wt%, even more further preferably less than about 30 wt%.

Examples of the NCO content of the polyurethane adhesive composition may comprise at least about 5%, preferably at least about 10%, more preferably at least about 15%, further preferably up to about 25% and even more preferably no more than about 23%. In particular, the NCO content may be from 5 to 25 %, or 5 to 23 %, or 10 to 25 %, or 10 to 23 %, or 15 to 25%, or 15 to 23%.

The aforementioned flame retardant package may comprise an additional non-halogenated flame retardant, preferably the additional non-halogenated flame retardant comprises at least one of zinc borate, melamine polyphosphate or both.

In another optional embodiment regarding the flame retardant package, preferably the flame retardant package comprises less than 5 wt% of a halogenated flame retardant, preferably less than about 3 wt%, more preferably less than about 1 wt%, further preferably no more than trace amounts of the halogenated flame retardant. More preferably the limitation regarding halogenated flame retardants is applied to the polyurethane adhesive composition not just the flame retardant package. The wt% stated in the paragraph may be based on the wt% of the polyurethane adhesive composition.

In an embodiment the polyurethane adhesive composition may have less than 0.1 wt%, preferably less than about 0.05 wt%, more preferably no more than trace amounts, further preferably less than traces amounts, of a silane adhesion promoter selected from the group comprising an isocyanurato silane adhesion promoter, an isocyanato silane adhesion promoter and combinations thereof.

In another embodiment, the polyurethane adhesive composition may have less than 0.5 wt%, preferably less than about 0.1 wt%, further preferably less than about 0.05 wt%, more preferably no more than trace amounts, furthermore preferably less than traces amounts of an epoxy functional silane adhesion promoter.

In a preferred embodiment, the polyurethane adhesive composition comprises less than about 1 wt% of a formaldehyde containing compound and/or a formaldehyde forming compound upon the application of heat to the cured composition, preferably less than about 0.5 wt%, more preferably less than about 0.1 wt%, further preferably no more than trace amounts, and even more preferable less than trace amounts.

Any one of the embodiments of the polyurethane adhesive composition described herein may include a rheology modifier, preferably the rheology modifier comprises fumed silica, further preferably an amount of the fumed silica comprises no more than about 7 wt%, more preferably no more than about 5 wt%, even more preferably no more than about 3 wt%, most preferably at least about 1 wt%.

Optionally, the polyurethane adhesive composition may include one or more further rheology modifiers. Preferably the further rheology modifier includes a carbon content of at least 3% by weight. Preferably, the carbon content will include long chain carbon side groups. Rheology modifiers with the at least 3% carbon content may function as a thickening agent, increasing the viscosity of the adhesive composition. Such rheology modifiers may also improve the shear properties of the adhesive composition. An example of a suitable rheology modifier is polydimethylsiloxane.

Other examples of possible rheology modifiers can include, but are not limited to, bentonites, hectorites, colloidal silicas, attapulgite, precipitated calcium carbonate, montmorillonite, fibers, zirconates, aluminates, cellulosics, polysaccharides, and polyamides. They may for example be present in an amount from about 0.01 wt.% to 5.0 wt.% based on the total weight of the adhesive composition.

The adhesive composition according to the present disclosure may further comprise fillers. Suitable examples of fillers can include, but are not limited to, calcium carbonate, silica, barium sulfate, alumina trihydrate (ATH), clay, calcium sulfate, talcum powder, mica powder, carbon black, graphite, glass fibers, molecular sieves. Further, the fillers can be present in an amount of from about 2.0 wt.% to 10 wt.%, based on the total weight of the adhesive composition.

The adhesive composition according to the present disclosure further optionally comprises activators. Number of aliphatic and aromatic amines can be used as activators for the purpose of the present disclosure. Suitable examples of such compounds can include, but are not limited to, diaminobicyclooctane (DABCO), 2,2'-dimorpholinodiethylether (DMDEE), trimethylaminioethylethnolamine, N,N,N',N',N" -pentamethyldi ethylenetriamine, N-ethylmorpholine, 2-methyl-2-azanorborane, and guanidines. Other examples of the activators can include, but are not limited to, organometallic compounds based on titanium, zinc, bismuth, or zirconium metals, such as, dibutyltin dilaurate, dibutyltin diacetate, stannous octoate, dibutyltin dimercaptide, zinc neodecanoate, zinc octoate, bismuth carboxylate, zirconium octoate and different ligand chemistries surrounding catalytic metal center; alkali metal salts of carboxylic acids and phenols, such as, calcium, magnesium, strontium, barium, salts of hexanoic, octanoic, naphthenic, and linolenic acid. The activators can be present in an amount of from above trace amounts to about 1.0 wt.%, based on the total weight of the adhesive composition.

The adhesive composition according to the present disclosure may further comprise at least one further additive. The amount of further additives can vary in the range of from about 0.01 wt.% to 5.0 wt.%, based on the total weight of the adhesive composition. The further additives can for example include defoamers. Suitable examples of the defoamers can include, but are not limited to, polysiloxane compounds such as polysiloxane-polyalkylene copolymers.

Optionally the adhesive composition may also include one or more surfactants. The surfactant may be a non-functional or functionalized surfactant.

Preferred examples of the polyol component of the polyurethane adhesive composition may comprise a polyether, preferably the polyether comprises a polyol ether diol, more preferably the polyol ether diol comprises a plurality of primary diols, further preferably wherein the polyol ether diol comprises a bisphenol A component, even more preferably wherein the polyol ether diol having the bisphenol A component comprises a plurality of primary hydroxyl units.

Further examples of the polyol component that may be used for preparing the composition of the present disclosure can be polyols suitable for making polyurethanes. They can be polyols based on polyalkylene oxides, polyester or combinations thereof, which can include bulky side chains and/or long hydrophobic chains. The polyols based on polyalkylene oxides are often referred to as polyether polyols. The polyols can also include polyamide polyols, polycaprolactone polyols such as poly-ε-caprolactone polyol, polycarbonate polyols, hydroxyl terminated polybutadienes such as fully-hydrogenated hydroxy-terminated polybutadiene and/or partially-hydrogenated hydroxy-terminated polybutadiene, polyisobutylene diols, as well as mixtures thereof.

Further polyether polyols can include a linear and/or branched polyether having hydroxyl groups. Examples of the polyether polyols may include substituted and/or unsubstituted polyoxyalkylene polyols such as polyethylene glycol, polypropylene glycol, polybutylene glycol and the like. Further, a homopolymer and/or a copolymer of the polyoxyalkylene polyols may also be employed. Particularly, the copolymers of the polyoxyalkylene polyols may include an adduct having at least one compound selected from the group consisting of ethylene glycol, propylene glycol, diethylene glycol, dipropylene glycol, triethylene glycol, 2-ethylhexanediol-1,3-glycerin, 1,2,6-hexane triol, trimethylol propane, trimethylol ethane, tris(hydroxyphenyl)propane, triethanolamine, triisopropanolamine, ethylenediamine and ethanolamine; with at least one compound selected from the group consisting of ethylene oxide, propylene oxide and butylene oxide.

The polyether polyols can include polymers of propylene oxides and/or copolymers of ethylene and propylene oxides. In one non-limiting embodiment, the polyether polyol is ethylene oxide capped polypropylene oxide.

The polyether polyol may be an amphiphilic block copolymer. The amphiphilic block polymer means a copolymer characterized by a hydrophilic block that is chemically tethered to a hydrophobic block.

Suitable examples of the hydrophilic block segments can include, but are not limited to, polyethylene oxide (PEO) block, polyacrylamide (PAM) block, polyester blocks, polyamide blocks, and polysaccharide blocks.

Suitable examples of the hydrophobic block segment can include, but are not limited to, polypropylene oxide (PPO) blocks, poly(methylmethacrylate) (PMMA) blocks, poly(styrene) blocks, polyvinylchloride blocks, polyethylene blocks, and polydimethylsiloxane blocks.

In one non-limiting embodiment of the present disclosure, the hydrophilic block segment can be PEO block. In another non-limiting embodiment of the present disclosure, the hydrophobic block segment can be PPO block.

Further, the polyether polyol block copolymer according to the present disclosure can be a diblock, triblock or a tetrablock copolymers. In one non-limiting embodiment of the present disclosure, the polyether polyol block copolymer can be a triblock polymer. In one non-limiting embodiment of the present disclosure, the polyether polyol triblock copolymer can be derived from ethylene oxide (EO) and propylene oxide (PO) repeating units. The polyether polyol block copolymer according to the present disclosure can be a poly(ethylene oxide)-poly(propylene oxide)-poly(ethylene oxide) block copolymer (PEO-PPO-PEO) or a polypropylene oxide)-poly(ethylene oxide)-poly(propylene oxide) (PPO-PEO-PPO) block copolymer.

In one non-limiting embodiment of the present disclosure, the ethylene oxide (EO) and propylene oxide (PO) repeating units can be present in a weight ratio of from about 1:10 to about 10:1. In one embodiment of the present disclosure, the weight ratio can vary in the range of from about 1:5 to about 5:1 or from about 1:3 to about 3:1 or from about 1:2 to about 2:1, in certain embodiments the ratio may be up to about 10:1 or up to about 5:1.

The polyether polyols used in the present disclosure may include one or more 2-functionality polyether polyols, one or more 3-functionality polyether polyols, one or more 4-functionality polyether polyols, or combinations thereof. The number average molecular weight of the 2-functionality polyether polyols can be varied from about 2,000 to about 20,000 Daltons, or in a range of about 2,000-12,000 Daltons. For example, Pluracol^{®} P2010 is a polyether polyol having a number average molecular weight of 2,000 Daltons, which is commercially available from BASF. PPG 2000 available from PPG is another example of a suitable polyether polyol. The number average molecular weight of the 3-functionality polyether polyols can be varied from about 84 to about 20,000 Daltons or in a range of about 100-12,000 Daltons, including Pluracol^{®} TP-440 polyol commercially available from BASF. The number average molecular weight of the 4-functionality polyether polyols can be varied from about 100 to about 20,000 Daltons or in a range of about 400-12,000 Daltons. For example, Pluracol^{®} 355 is a polyether polyol having a number average molecular weight of 600 Daltons, which is commercially available from BASF. In some embodiments the polyether polyol will have a molecular weight of at least 4,000 Daltons. In an alternative example, the polyether polyol will have a molecular weight of no more than about 4,000 Daltons, preferably less than about 3,000 Daltons.

In one embodiment, the polyether polyol triblock copolymer according to the present disclosure can have a weight average molecular weight below 4,000 Daltons. In one non-limiting embodiment of the present disclosure, the weight average molecular weight of the polyether polyol block copolymer can vary in the range of from 100 Daltons to 2,000 Daltons or from 2,000 Daltons to 4,000 Daltons. In other non-limiting embodiments, the weight average molecular weight of the polyether polyol may be less than 3,000 Daltons, preferably less than 2,500 Daltons. In a further example, the weight average molecular weight of the polyether polyol may be about 1,000- 2,300 Daltons.

In terms of ratio of the weighted average molecular weight of the various blocks of the polyether polyol, preferably the ratio is no more than about 2: 1, more preferably no more than about 1.5:1, and even more preferably no more than about 1.2:1.

Another property of interest of the polyether polyol may be its HLB (hydrophilic-lipophilic balance) value. Preferably, the polyol has an HLB value of no more than 20. Specific embodiments may have HLB values in one of the following ranges: about 5-20, about 6-15, about 7-12 or about 8-10.

In addition to the polyether polyol block copolymer, the adhesive composition of the present disclosure can further comprise polyhydric alcohols or polyols. The polyols having from 2 to 15 carbons atoms can suitably be used, for example, ethylene glycol, 1,2-propylene glycol, 1,3-propylene glycol, 1,4-butane diol, 2,3-butane diol, 1,5-pentane diol, glycerol and the like. Other suitable and non-limiting examples of such polyols can also include, phosphate diol, aromatic polyols such as Catechol, Resorcinol, hydroquinone, 1,5-dihydroxynaphthalene, 2,6-dihydroxynaphthalene, 2,7-dihydroxynaphthalene, 1,6-dihydroxynaphthalene, 2,2'-biphenol, 4,4'-biphenol, Bisphenol A, Bisphenol F, Bisphenol S, Bisphenol H, Bisphenol A ethoxylates, Bisphenol A propoxylates, 2,5-bis(hydroxymethyl)furan, 3,4-bis(hydroxymethyl)furan, 2,6-pyridinedimethanol, 1,3-benzenedimethanol, 1,4-benzenedimethanol, and 1,4-benzenediethanol.The amount of such polyhydric alcohols or polyols can vary from about 0 wt.% to 40 wt.%, or from about 1 wt.% to about 40 wt.%, or from about 1 wt.% to about 10 wt.%, based on the total weight of the adhesive composition.

Optionally the adhesive composition may include a polyester polyol. The polyester polyol may be used in place of or in conjunction with the polyether polyol. In the case the polyester polyol and the polyether polyol are used in conjunction, the wt% of the polyether polyol is at least about 5 wt%.

The polyols based on polyesters (also called polyester polyols) can include amorphous and liquid polyester polyols, fatty acid polyester polyols such as castor oil and vegetable oils having different molecular weights and functionalities.

Examples of the fatty acid polyester polyols may include castor oil, the products of hydroxylation of unsaturated or polyunsaturated natural oils, the products of hydrogenations of unsaturated or polyunsaturated polyhydroxyl natural oils, polyhydroxyl esters of alkyl hydroxyl fatty acids, polymerized natural oils, soybean polyol, alkylhydroxylated amides of fatty acids, and cashew nutshell liquid.

The polyester polyols can be formed as reaction products of one or more carboxylic acids with one or more polyols such as diols and/or triols. The carboxylic acids useful in forming the polyester polyols can include, but are not limited to, adipic, glutaric, succinic, malonic, oxalic acids and mixtures thereof. The diols useful in forming the polyester polyols can include, but are not limited to, ethylene glycol, propanediol, butanediol, neopentyldiol, pentanediol and hexanediol and mixtures thereof. The triols which are considered useful in forming the polyester polyol can include trimethylol propane.

In one non-limiting embodiment, the polyester polyol can be obtained from a reaction of a triol with azelaic acid. The triol can be glycerol. One example of such polyester polyol is Emerox^{®} 14001, which is derived from natural oils and commercially available from Emery Oleochemicals Company.

In a 2 component PUR adhesive, commercially available polyether polyol block copolymers can be used for preparing the isocyanate terminated urethane prepolymer (as the NCO prepolymer) described further herein. For example, Pluronic^{®} series of polyols commercially available from BASF or Makon^{®} series of polyols from Stepan can be used. Alternatively, the polyether polyol block copolymer can also be prepared by using methods known to persons skilled in the related art, for example, the methods as disclosed in Macromolecules 29, 6994-7002 (1996) and Macromolecules 33, 9522-9534 (2000) and J. Polym. Sci. Part B: Polym. Phys. 45, 3338-3348 (2007).

Other examples of suitable polyester polyols include polyglycols dicarboxylates, polycaprolactone polyols, polycaprolactone and combinations thereof. Useful polyester polyols may be prepared from the reaction product of polycarboxylic acids, their anhydrides, their esters or their halides, and a stoichiometric excess polyhydric alcohols. Suitable polycarboxylic acids include dicarboxylic acids and tricarboxylic acids including, e.g., aromatic dicarboxylic acids, anhydrides and esters thereof (e.g. terephthalic acid, isophthalic acid, dimethyl terephthalate, diethyl terephthalate, phthalic acid, phthalic anhydride, methylhexahydrophthalic acid, methyl- hexahydrophthalic anhydride, methyl-tetrahydrophthalic acid, methyl - tetrahydrophthalic anhydride, hexahydrophthalic acid, hexahydrophthalic anhydride, and tetrahydrophthalic acid), aliphatic dicarboxylic acids and anhydrides thereof (e.g. maleic acid, maleic anhydride, succinic acid, succinic anhydride, glutaric acid, glutaric anhydride, adipic acid, hexanoic acid, pimelic acid, suberic acid, azelaic acid, sebacic acid, chlorendic acid, 1,2,4-butane-tricarboxylic acid, decanedicarboxylic acid, octadecanedicarboxylic acid, dimeric acid, dimerized fatty acids, trimeric fatty acids, and fumaric acid), and alicyclic dicarboxylic acids (e.g. 1,3-cyclohexanedicarboxylic acid, and 1,4-cyclohexanedicarboxylic acid).

Additionally examples of suitable polyols from which polyester polyols can be derived include aliphatic polyols, e.g., ethylene glycols, propane diols (e.g., 1,2-propanediol and 1,3-propanediol), butane diols (e.g., 1,3-butanediol, 1,4-butanediol,), pentane diols (e.g., 1,5-pentanediol), 1,6-hexanediol, 1,8-octanediol, 1,10-decanediol, neopentyl glycol, diethylene glycol, triethylene glycol, tetraethylene glycol, polyethylene glycols, propylene glycol, polypropylene glycols (e.g., dipropylene glycol and tripropylene glycol), 1,4-cyclohexanedimethanol, 1,4-cyclohexanediol, dimer diols, bisphenol A, bisphenol F, hydrogenated bisphenol A, hydrogenated bisphenol F, glycerol, tetramethylene glycol, polytetramethylene glycol, 3-methyl-1,5-pentanediol, 1,9-nonanediol, 2-methyl-1,8-octanediol, trimethylolpropane, glycerin, pentaerythritol, sorbitol, glucose, and combinations thereof.

Preferably, the polyester polyol may be amphiphilic also. The above properties regarding the polyether polyol are equally applicable to the polyester polyol, whether used with or without the polyether polyol.

The number average molecular weight of the polyester polyol is typically varied from about 1,000 to about 20,000 Daltons, or in a range of about 1,300-10,000 Daltons. Admex^{™} 525 polyol (commercially available from Eastman Chemical Company) is a 1,400-molecular-weight polyester polyol and may be used.

In another specific embodiment, the polyol component may have a number average molecular weight of at least about 15,000 Daltons, preferably at least about 20,000 Daltons, even more preferably at least about 50,000 Daltons and most preferably more than about 80,000 Daltons. An example of a polyol component with a number average molecular weight of least about 15,000 Daltons is Hyperlite^{®} E-855 polyoxyalkylene polyol.

The polyisocyanate component used for preparing the composition of the present disclosure can include any isocyanate compounds, which contains two or more isocyanate groups. Further, the isocyanates can be polyisocyanates including aromatic, aliphatic, arylaliphatic polyisocyanates or mixtures thereof. The polyisocyanates can be diisocyanates that include aliphatic, cycloaliphatic, aromatic or aliphatic-aromatic diisocyanates. Suitable examples of the aliphatic and cycloaliphatic diisocyanates can include, but are not limited to, ethylene diisocyanate, ethylidene diisocyanate, propylene diisocyanate, butylene diisocyanate, trimethylene diisocyanate, cyclopentylene-1,3-diisocyanate, cyclo-hexylene-1,4-diisocyanate, cyclohexylene-1,2-diisocyanate, dichlorohexa-methylene diisocyanate, furfurylidene diisocyanate, 1,4-tetramethylene diisocyanate, 1,6-hexamethylene diisocyanate, 2,2,4-trimethyl-1,6-hexamethylene diisocyanate, 1,12-dodecamethylene diisocyanate, 1-isocyanato-2-isocyanatomethyl cyclopentane, 1-isocyanato-3-isocyanato-methyl-3,5,5-trimethylcyclohexane (isophorone diisocyanate or IPDI), bis-(4-isocyanatocyclohexyl)-methane, 2,4'-dicyclohexylmethane diisocyanate, 1,3- or 1,4-bis-(isocyanatomethyl)-cyclohexane, bis-(4-isocyanato-3-methylcyclohexyl)-methane, α',α',α',α'-tetramethyl-1,3-and/or -1,4-xylylene diisocyanate, 1-isocyanato-1-methyl-4(3)-isocyanatomethyl cyclohexane, 2,4- or 2,6-hexahydrotoluylene diisocyanate, and the like.

Similarly, suitable examples of the aromatic and aliphatic-aromatic diisocyanates can include, but are not limited to, 2,4- and/or 2,6-toluene diisocyanate, diphenyl methane-2,4'-and/or 4,4'-diisocyanate (MDI); 2,2-diphenylpropane-4,4'-diisocyanate, xylylene diisocyanate, 1,4-naphthylene diisocyanate, 1,5-naphthylene diisocyanate, m-phenylene diisocyanate, p-phenylene diisocyanate, diphenyl-4,4'-diisocyanate, azobenzene-4,4'-diisocyanate, diphenylsulphone-4,4'-diisocyanate, 2,4-tolylene diisocyanate, 1-chlorobenzene-2,4-diisocyanate, 4,4',4"-triisocyanatotriphenylmethane, 1,3,5-triisocyanato-benzene, 2,4,6-triisocyanato-toluene, 4,4'-dimethyldiphenyl-methane-2,2',5,5-tetratetraisocyanate, and modified aromatic diisocyanates containing carbodiimide groups, urethane groups, allophanate groups, isocyanurate groups, urea groups or biuret.

In one non-limiting embodiment of the present disclosure, the isocyanate compound can be diphenyl methane diisocyanate (MDI). The diphenyl methane diisocyanate (MDI) can be used in monomeric form or in polymeric form. The monomeric form of MDI can comprise diphenyl methane-2, 4'-diisocyanate (also called 2, 4' isomer herein) or diphenyl methane-4,4'-diisocyanate (also called 4, 4' isomer herein) or mixtures thereof. In one non-limiting embodiment of the present disclosure, the isocyanate compound is polymeric MDI (pMDI). The polymeric MDI used in the present disclosure can have an average isocyanate functionality of at least about 2. The isocyanate functionality of the polyisocyanate component can vary in the range of from about 2.0 to 3.0.

The polyisocyanate component of the present disclosure may comprise free isocyanate (NCO) groups. The free isocyanate groups can typically be obtained from the reaction of at least one isocyanate containing compound and at least one polyether polyol. The free hydroxyl groups of the polyether polyol react with the free isocyanate groups. The composition according to the present disclosure can have an isocyanate content in an amount of from about 10 wt.% to about 75 wt.% or from about 10 wt.% to about 70 wt.%, or from about 15 wt.% to about 50 wt.%, or from about 10 wt.% to about 45 wt.%, or from about 1 wt.% to about 40 wt.%, based on the total weight of the composition.

In another embodiment applicable to any embodiment disclosed herein the polyurethane adhesive composition may comprises less than 2 wt% of a small molecule wherein the small molecule comprises at least one of tris-chloroisopropyl-phosphate (TCPP), tris(1,3-dichloroisopropyl)phosphate (TDCPP), tris-chloroethyl-phosphate (TCEP) and combinations thereof, preferably no more than 1 wt%, more preferably less than 0.5 wt%, even more preferably no more than trace amounts.

The adhesive composition also may contain less than 10 wt% of water, preferably less than about 1 wt% of water, more preferably only trace amounts of water, even more preferably, the composition is devoid of water.

Any one of the polyurethane adhesive compositions disclosed herein may have a viscosity of the adhesive composition which comprises less than about 1,000,000 cP, preferably less than about 500,000 cP, further preferably less than about 100,000 cP, more preferably less than about 50,000 cP, even more preferably no more than about 30,000 cP or preferably about 5,000- 30,000 cP, more preferably about 6,000-25,000 cP, even more preferably no more than about 20,000 cP (in particular about 6,000 to 20,000), measured using a Brookfield viscometer with a number 6 spindle at 20 rpm at room temperature (20-25°C).

An example of a two-component polyurethane adhesive composition which includes the flame retardant package includes an NCO prepolymer comprising the reaction product of an isocyanate compound and a polyol, preferably a NCO% in the prepolymer comprises up to about 30%, more preferably from about 1 to 20%, even more preferably from at least 10% to less than 20% or from about 1 to 10%, and a second component comprising a second polyol, preferably having a number average molecular weight of at least about 2,000 Daltons, more preferably at least about 4,000 Daltons, even more preferably at least about 8,000 Daltons and most preferably more than 10,000 Daltons.

A constituent of the two-component polyurethane adhesive composition comprises a flame retardant package, wherein the flame retardant package comprises no more than about 20 wt% of the composition, preferably no more than about 15 wt%, more preferably no more than about 10 wt%. The flame retardant package includes a liquid phosphate ester, based on the weight of the composition, the liquid phosphate ester comprises no more than about 15 wt% of the two-component polyurethane adhesive composition, preferably less than about 10 wt%, more preferably no more than about 5 wt%, further preferably no more than about 4 wt%, even more preferred no more than about 3 wt%, preferably the liquid phosphate ester comprises a polymer. The flame retardant package also includes a solid ammonium polyphosphate, said solid ammonium polyphosphate comprising "n" number of ammonium phosphate units wherein "n" comprises at least about 500, further preferably at least about 750, more preferably at least about 1000, even more preferably at least about 1500.

The two-component adhesive composition may optionally include a silane adhesion promoter selected from the group comprising an isocyanurato silane adhesion promoter, an isocyanato silane adhesion promoter and combinations thereof, a concentration of the silane adhesion promoter comprises about 0.1 to 10 wt% of the two-component polyurethane adhesive composition, (non-limiting example of the isocyanurato silane: 1,3,5-tris[3-(trimethoxysilyl)propyl]-1,3,5-triazine-2,4,6(1H,3H,SH)-trione). Another optional component may include an epoxy functional silane adhesion promoter, which may be included in the two-component adhesive composition in an amount of at least 0.5 wt% up to about 20 wt% of the two-component polyurethane adhesive composition. The various types of silane adhesion promoters listed herein may be used in any combination thereof.

Alternatively the two-component adhesive composition may include less than 0.1 wt% of the isocyanurato silane adhesion promoter, the isocyanato silane adhesion promoter and combinations thereof, preferably less than about 0.05 wt%, more preferably no more than trace amounts and/or less than 0.5 wt% of the epoxy functional silane adhesion promoter, preferably no more than trace amounts of the epoxy functional silane adhesion promoter.

Preferred properties of the cured two-component polyurethane adhesive (when cured) may include one or more of the following: preferably (1) a tensile strength of the adhesive comprises at least about 1 MPa, more preferably at least about 5 MPa, even more preferably at least about 7 MPa, even more preferably at least about 10 MPa; (2) Young's modulus of at least about 1 MPa, (3) an NCO to OH index of at least about 80 to 130, preferably at least about 100 (in particular from 100 to 130), more preferably at least about 110 (in particular from 110 to 130) and further preferably not more than about 125 (in particular from 110 to 125); and (4) combinations thereof.

Optionally the two-component polyurethane adhesive may further include a tertiary amine, preferably the tertiary amine comprises at least one of: 1,4-Diazabicyclo[2.2.2]octane solution, DBU (diazabicycloundecene), 1,4-diazabicyclooctane and combinations thereof.

In a preferred embodiment of the two component adhesive composition a number average molecular weight of the second polyol may comprises at least about 10,000 Daltons, preferably at least about 20,000 Daltons, more preferably at least about 35,000 Daltons, even more preferably at least about 50,000 Daltons and most preferably at least about 80,000 Daltons.

In one non-limiting embodiment of the present disclosure, the prepolymer may be referred to as an isocyanate-terminated urethane prepolymer.

The isocyanate-terminated urethane prepolymer can be prepared by mixing polyols; drying the polyols at the temperature of from about 80 °C to about 105 °C; adding isocyanate containing compounds (especially diisocyanates) at about or less than 65 °C; increasing the temperature to about 80 °C to about 105 °C; and a typical residence time at this temperature range is about one hour or until the isocyanate content (as determined by n-butyl amine titration) reaches equilibrium (or slightly lower). The reaction can be conducted under vacuum. As stated earlier, the isocyanate-terminated urethane prepolymer according to the present disclosure comprises free NCO group. The free NCO containing urethane prepolymers can be obtained by reacting excess of isocyanate containing compounds with the polyols (especially with the polyether polyols or with the mixture of polyether polyols and polyhydric alcohols). In one non-limiting embodiment of the present disclosure, the molar ratio of isocyanate containing compound (NCO) to polyether polyol (OH) can vary in the range of from about 0.9 to about 1.5 .

The polyurethane adhesive compositions disclosed herein may comprise or be a structural adhesive, preferably the structural adhesive comprises either a 1 component adhesive or a 2 component adhesive.

Anyone of the above adhesive compositions may be used to form an engineered wood composite. The composite includes any one of the above adhesive compositions and a plurality of wood based materials, preferred examples of the wood based materials include wood chips, wood strains, sawdust, particles of wood and combinations thereof, more preferred the engineered wood composite has a three-dimensional shape, further preferred the three-dimensional shape comprises one of a board, a sheet, or a plank.

An application of the polyurethane adhesive disclosed herein comprises using the adhesive for forming a laminate. The laminate may comprise 2 wood substrates and an embodiment of the polyurethane adhesive compositions disclosed herein in its cured condition adheres the 2 wood substrates together, preferably at least one of the 2 wood substrates comprises a structural substrate, more preferably both of the 2 wood substrates comprises a structural substrate.

Examples of a material of construction of the substates comprises one of a wood particle board, wood chipboard, wood-oriented strand board, waferboard, wood fiberboard, parallel strand lumber, laminated strand lumber, plywood, laminated veneer lumber, straw particle board or straw fiberboard, the first substrate and the second substrate may comprise the same material of construction, or preferably the first substrate and the second substrate comprise the different material of construction. The aforementioned embodiments may include 1 or both of the substrates.

The wood substrate may also be described as a lignocellulosic substrate. As used herein, the term "lignocellulosic substrate" means a substrate made from woody materials such as cellulose or lignin. Further, the woody material can be a softwood or a hardwood. Suitable examples of such lignocellulosic substrates can include, but are not limited to, solid lumber, wood particle board, wood chipboard, wood-oriented strand board, waferboard, wood fiberboard, parallel strand lumber, laminated strand lumber, plywood, laminated veneer lumber, straw particle board or straw fiberboard.

Optionally the laminate may comprise a primer (also called "primer composition" in the present text), preferably the primer comprises an ammonium phosphate, more preferably an ammonium dihydrogen phosphate.

A method of bonding a first substrate and a second substrate may comprise the following steps of: (i) providing a first substrate having at least one surface and a second substrate having at least one surface, wherein the first substrate comprises a lignocellulosic substrate and the second substrate comprises a lignocellulosic substrate or a non-lignocellulosic substrate, (ii) applying the adhesive composition as disclosed above to the surface of one of the first substrate or the second substrate or to both the first and second substrates, (iii) sandwiching the composition between the first substrate and the second substrate; and (vi) curing the adhesive composition at a pressure of at least about 15 psi, preferably up to about 300 psi, more preferably up to about 200 psi in particular from 15 to 300 psi, or from 15 to 200 psi), and for a time period of at least about 5 minutes, preferably no more than 440 minutes (in particular, from 5 to 440 minutes).

The substrates may be joined to form an adhesive bond. In general, the substrates should be joined as per recommended assembly time instructions given in technical literature of adhesive that includes open assembly time, close assembly time and press time. Typical assembly time for the adhesive is between less than 1 min to as long as 75 minutes. Further, the adhesive composition of the present disclosure can be cured in a conventional manner, for example, at ambient temperature or elevated temperature and under pressure. The curing typically involves applying a pressure of about 15 psi to 300 psi, preferably up to about 200 psi (such as from 15 to 200 psi), using appropriate press time period of about 5 minutes to typically no more than about 440 minutes to enable the formation of strong adhesive bond. Examples of suitable pressures may range from about 50 to about 220 psi, about 60- about 200 psi, about 60- about 190 psi, about 90- about 185 psi or about 60- about 90 psi. The press time can vary based on adhesive press time recommendation, for example, the type and amount of activators or catalysts being used in the present adhesive composition. Further, heat can also be applied along with pressure to accelerate the curing of the present adhesive composition.

In another non-limiting embodiment of the present disclosure, the method of bonding first substrate and second substrate can also comprise a method step of applying the primer composition to the first substrate or to the second substrate or to both first and second substrates before applying the polyurethane adhesive composition of the present disclosure. The application of the adhesive composition on the substrate surface according to the present disclosure can be carried out using conventional methods known in the related art, for example, a brushing, a spraying or a coating technique.

The adhesive composition according to the present disclosure can be applied immediately after the primer application or can be applied after a certain time interval. In one non-limiting embodiment of the present disclosure, the adhesive composition can be applied immediately after the primer application on the substrates. In another non-limiting embodiment of the present disclosure, the adhesive composition can be applied within 24 hours to 7 days of the primer application on the substrate.

The first and second substrate as used herein in the present disclosure can be made of same or different material. The first substrate used in the present disclosure can be a lignocellulosic substrate whereas the second substrate used in the present disclosure can be a lignocellulosic substrate or a non-lignocellulosic substrate. The lignocellulosic substrates as used in the present method of bonding means a substrate made from woody materials such as cellulose and lignin. The lignocellulosic substrates can be chosen from softwood or hardwood species. Suitable examples of such lignocellulosic substrates can include, but are not limited to, solid lumber wood particle board, wood chipboard, wood-oriented strand board, waferboard, wood fiberboard, parallel strand lumber, laminated strand lumber, plywood, laminated veneer lumber, straw particle board or straw fiberboard. Similarly, suitable examples of the non-lignocellulosic substrate can include, but are not limited to, alloys, glass, ceramics, foams, plastics, composites, metals, bovine or equine hoof.

The method may also comprise applying a primer to the surface of the first substrate or the second substrate, prior to applying the adhesive composition, wherein the primer comprises at least one of water (the primer is thus also called aqueous primer), preferably in the form of a mist, ammonium phosphate, preferably ammonium dihydrogen phosphate, and combinations thereof.

Alternatively, the present disclosure is not limited to a structural adhesive. The aforementioned polyurethane adhesive composition may be used in non-structural applications.

Similar to the optional surfactant of the adhesive, the surfactant in the primer may be a non-functional surfactant, even more preferably having no more than 2 hydroxyl units, further preferably no more than a hydroxyl unit.

In another optional embodiment, the primer may have less than an effective amount of an adhesion promoter, e.g., no more than about 3 wt%, preferably less than 1 wt%, more preferably no more than trace amounts of the adhesion promoter, even more preferably is substantially devoid of the adhesion promoter.

Similarly, suitable examples of the alkyl phenol ethoxylates that can be used in the primer composition of the present disclosure can include, but are not limited to, tristyrylphenol ethoxylates, polyethoxylated tallow amine, decyl alcohol ethoxylates, undecyl alcohol ethoxylates, tridecyl alcohol ethoxylates, propylheptanol alcohol ethoxylates, amide ethoxylates, cocoamine ethoxylates, nonyl phenol ethoxylates, ethoxylated octyl phenol , castor oil ethoxylates, sorbitan ester ethoxylates, tridecyl alcohol alkoxylates, tall oil fatty acid ethoxylates, lauryl alcohol ethoxylates, and ethoxylated phenol. In one non-limiting embodiment of the present disclosure, the alkyl phenol ethoxylates can be ethoxylated octylphenol. Further, the alkyl phenol ethoxylates can be present in an amount of from about 30 wt.% to about 50 wt.% or from about 35 wt.% to about 50 wt.% or from about 35 wt.% to about 45 %, based on the total weight of the primer composition.

The water present in the aqueous primer composition of the present disclosure can be filtered water, deionized water, distilled water, pure water, tap water, treated water or any mixtures thereof. In one non-limiting embodiment of the present disclosure, the water can be present in amount of from about 10 wt.% to about 30 wt.% or from about 15 wt.% to about 25 wt.%, based on the total weight of the primer composition. In another non-limiting embodiment of the present disclosure, the water can be mixed with at least one other solvent. Suitable examples of such solvents can include, but are not limited to acetone, ethanol, methanol, and any combinations thereof.

The aqueous primer composition of the present disclosure can have pH in the range of from about 4 to about 8 or from about 5 to about 7.

The aqueous primer composition of the present disclosure can be prepared by blending various ingredients. The aqueous primer composition according to the present disclosure can be present in solution form. The aqueous primer composition of the present invention can be used as such or can be diluted further just before the application. In one non-limiting embodiment of the present disclosure, the diluted form of the primer composition can comprise from about 0.5 wt.% to about 9 wt.% of the primer composition, based on the total weight of the diluted form of the primer composition.

Another aspect of the present disclosure relates to a method of bonding at least two substrates by using the moisture cure adhesive composition (i.e. the polyurethane adhesive composition) of the present disclosure. The method according to the present disclosure can comprise the steps of: (i). providing a first substrate having at least one surface and a second substrate having at least one surface; (ii) applying the moisture cure adhesive composition of the present disclosure to at least one surface of the first substrate or to at least one surface of the second substrate or to the both first and second substrates; (iii) contacting the composition bearing first substrate or second substrate or both the first substrate and second substrate for bonding; and (iv) curing the moisture cure adhesive composition. The moisture cure adhesive composition according to the present disclosure can be applied to one substrate or both the substrates. The substrates are then joined to form an adhesive bond. In general, the substrates should be joined as per recommended assembly time instructions given in technical literature of adhesive that includes open assembly time, close assembly time and press time.

Typical assembly time for the adhesive is between less than about 1 minute to as long as about 75 minutes. Further, adhesive composition of the present disclosure can be cured in a conventional manner, for example, at ambient temperature or elevated temperature and under pressure. The curing typically involves applying a pressure of about 15 psi to about 300 psi using appropriate press time period of about 5 minutes to typically no more than about 440 minutes to enable the formation of strong adhesive bond. Examples of suitable pressures may range from about 50 to about 220 psi, about 60- about 200 psi, about 60- about 190 psi, about 90- about 185 psi or about 60- about 90 psi. The press time can vary based on adhesive press time recommendation, for example, the type and amount of activators or catalysts being used in the present adhesive composition. Further, heat can also be applied along with pressure to accelerate the curing of the present adhesive composition.

In another non-limiting embodiment of the present disclosure, the method of bonding first substrate and second substrate can also comprise a method step of applying the primer composition to the first substrate or to the second substrate or to both first and second substrates before applying the polyurethane adhesive composition of the present disclosure. The application of the adhesive composition on the substrate surface according to the present disclosure can be carried out using conventional methods known in the related art, for example, a brushing, a spraying or a coating technique.

The adhesive composition according to the present disclosure can be applied immediately after the primer application or can be applied after a certain timer interval. In one non-limiting embodiment of the present disclosure, the adhesive composition can be applied immediately after the primer application on the substrates. In another non-limiting embodiment of the present disclosure, the adhesive composition can be applied within 24 hours to 7 days of the primer application on the substrate.

The first and second substrate as used herein in the present disclosure can be made of same or different material. The first substrate used in the present disclosure can be a lignocellulosic substrate whereas the second substrate used in the present disclosure can be a lignocellulosic substrate or a non-lignocellulosic substrate. The lignocellulosic substrates as used in the present method of bonding means a substrate made from woody materials such as cellulose and lignin. The lignocellulosic substrates can be chosen from softwood or hardwood species. Suitable examples of such lignocellulosic substrates can include, but are not limited to, solid lumber wood particle board, wood chipboard, wood-oriented strand board, waferboard, wood fiberboard, parallel strand lumber, laminated strand lumber, plywood, laminated veneer lumber, straw particle board or straw fiberboard. Similarly, suitable examples of the non-lignocellulosic substrate can include, but are not limited to, alloys, glass, ceramics, foams, plastics, composites, metals, bovine or equine hoof.

In one embodiment of the present disclosure, the substrate can be pretreated before applying the adhesive. Such pre-treatments can include physical look and/or cleaning methods, applying an adhesive promoter, an adhesive promoter solution or a primer.

The method of bonding the first substrate and the second substrate according to the present disclosure results in a composite article. The composite articles are in particular a structure, for example, panels, pipes, decking materials, boards, housings, sheets, poles, straps, fencing, members, doors, shutters, awnings, shades, signs, frames, window casings, backboards, wallboards, flooring, tiles, railroad ties, forms, trays, tool handles, stalls, bedding, dispensers, staves, films, wraps, totes, barrels, boxes, packing materials, baskets, straps, slips, racks, casings, binders, dividers, walls, indoor and outdoor carpets, rugs, wovens, and mats, frames, bookcases, sculptures, chairs, tables, desks, art, toys, games, wharves, piers, boats, masts, pollution control products, septic tanks, automotive panels, substrates, computer housings, above- and below-ground electrical casings, furniture, picnic tables, tents, playgrounds, benches, shelters, sporting goods, beds, bedpans, thread, filament, cloth, plaques, trays, hangers, servers, pools, insulation, caskets, book covers, clothes, canes, crutches, and other construction, agricultural, material handling, transportation, automotive, industrial, environmental, naval, electrical, electronic, recreational, medical, textile, or consumer products.

In still another aspect, the present disclosure provides composite articles obtained from the method of bonding as herein above described. The composite articles according to the present disclosure meets the requirement of Canadian Standard Association (CSA) Standard O112.9 and PRG-320 for CLT application.

Preferred is the following set of clauses 1 to 26:
1. A polyurethane adhesive composition comprising a flame retardant package, wherein the flame retardant package comprises no more than about 20 wt% of the composition, preferably no more than about 15 wt%, more preferably no more than about 10 wt%, the flame retardant package may comprises of a liquid phosphate ester, preferably based on the weight of the composition, no more than about 15 wt% of the liquid phosphate ester, preferably less than about 10 wt%, more preferably no more than about 5 wt%, further preferably no more than about 4 wt%, even more preferred no more than about 3 wt%, and a solid ammonium polyphosphate, said solid ammonium polyphosphate comprising "n" number of ammonium phosphate units wherein "n" comprises at least about 500, further preferably at least about 750, more preferably at least about 1000, even more preferably at least about 1500. Also, the composition comprises a polyisocyanate component and a polyol component and a molar ratio of the polyisocyanate component to the polyol component comprises more than about 1:1, preferably at least about 2:1, further preferably at least about 5:1, even more preferably at least about 10:1, and most preferably up to about 20:1. Further examples of suitable molar ratios may include 1.25:1, 1.5:1, 3:1, 4:1, 6:1, 7:1, 8:1, 9:1, 12:1, 15:1, 17:1 and 19:1.
2. The polyurethane adhesive composition of clause 1 wherein the liquid phosphate ester comprises a polymer.
3. The polyurethane adhesive composition of clause 1 or 2 wherein the adhesive composition comprises polymeric diphenylmethane diisocyanate ("polymeric (MDI)"), preferably the polymeric (MDI) comprises a 4, 4' isomeric content of at least about 20 wt% of the polyisocyanate component, more preferably at least about 25 wt%, further preferably at least about 30 wt%, even more preferably at least about 35 wt%, and most preferably at least about 40 wt%.
4. The polyurethane adhesive composition of clause 1 or 2 wherein the polyisocyanate component of the adhesive composition comprises more than about 35 wt% polymeric (MDI), preferably at least about 40 wt% of the polyisocyanate component, more preferably up to about 50 wt%, or about 35 wt% to about 75 wt%, more preferably about 60 wt% to less than about 75%, and/or preferably a monomeric MDI content of the polyisocyanate component comprises less than about 45 wt% of the polyisocyanate component, more preferably less than about 40 wt%, further preferably less than about 35 wt%, even more further preferably less than about 30 wt%.
5. The polyurethane adhesive composition of any one of clauses 1-4 wherein the adhesive comprises an NCO content of at least about 5%, preferably at least about 10%, more preferably at least about 15%, further preferably up to about 25% and even more preferably no more than about 23%.
6. The polyurethane adhesive composition of any one of clauses 1-5 wherein the flame retardant package further comprises an additional non-halogenated flame retardant, preferably the additional non-halogenated flame retardant comprises at least one of zinc borate, melamine polyphosphate or both.
7. The polyurethane adhesive composition of any one of clauses 1-6 wherein the adhesive composition comprises less than about 1 wt% of a formaldehyde containing compound and/or a formaldehyde forming compound upon the application of heat to the cured composition, preferably less than about 0.5 wt%, more preferably less than about 0.1 wt%, further preferably no more than trace amounts, and even more preferable less than trace amounts.
8. The polyurethane adhesive composition of any one of clauses 1-7 wherein the flame retardant package comprises no more than about 7 wt% of the polyurethane adhesive composition, preferably no more than about 5 wt%.
9. The polyurethane adhesive composition of any one of clauses 1-8 further comprising a rheology modifier, preferably the rheology modifier comprises fumed silica, further preferably an amount of the fumed silica comprises no more than about 7 wt% of the polyurethane adhesive composition, more preferably no more than about 5 wt%, even more preferably no more than about 3 wt%, most preferably at least about 1 wt%.
10. The polyurethane adhesive composition of any one of clauses 1-9 wherein the polyol component comprises a polyether, preferably the polyether comprises a polyol ether diol, more preferably the polyol ether diol comprises a plurality of primary diols, further preferably wherein the polyol ether diol comprises a bisphenol A component, even more preferably wherein the polyol ether diol having the bisphenol A component comprises a plurality of primary hydroxyl units.
11. The polyurethane adhesive composition of any one of clauses 1-10 wherein the adhesive composition comprises less than 2 w% of a small molecule, wherein the small molecule comprises at least one of tris-chloroisopropyl-phosphate (TCPP), tris(1,3-dichloroisopropyl)phosphate (TDCPP), tris-chloroethyl-phosphate (TCEP) and combinations thereof.
12. The polyurethane adhesive composition of any one of clauses 1-11 wherein a viscosity of the adhesive composition comprises less than about 1,000,000 cP, preferably the viscosity comprises less than about 500,000 cP, further preferably less than about 100,000 cP, more preferably less than about 50,000 cP, even more preferably no more than about 30,000 cP or about 5,000- 3,0000 cP, preferably about 6,000-25,000 cP, more preferably no more than about 20,000 cP, as measured with a Brookfield viscometer with a number 6 spindle at 20 rpm at room temperature (20-25°C).
13. The polyurethane adhesive composition of any one of clauses 1-12 wherein the adhesive composition comprises a structural adhesive, preferably the structural adhesive comprises either a 1 component adhesive or a 2 component adhesive.
14. The polyurethane adhesive composition of any one of clauses 1-13 wherein the polyurethane adhesive composition comprises less than 5 wt% of a halogenated flame retardant, preferably less than about 3 wt%, more preferably less than about 1 wt%, further preferably no more than trace amounts of the halogenated flame retardant.
15. The polyurethane adhesive composition of any one of clauses 1-14 wherein the polyurethane adhesive composition has less than 0.1 wt%, preferably less than about 0.05 wt%, more preferably no more than trace amounts, further preferably less than trace amounts, of a silane adhesion promoter selected from the group comprising an isocyanurato silane adhesion promoter, an isocyanato silane adhesion promoter and combinations thereof and/or the polyurethane adhesive composition has less than 0.5 wt%, preferably less than about 0.1 wt%, further preferably less than about 0.05 wt%, more preferably no more than trace amounts, further more preferably less than trace amounts, of an epoxy functional silane adhesion promoter.
16. A two-component polyurethane adhesive composition which includes an NCO prepolymer comprising the reaction product of an isocyanate compound and a polyol, preferably a NCO% in the prepolymer comprises up to about 30%, more preferably from about 1 to about 20%, even more preferably less than about 20% to at least about 10% or from about 1 to about 10%, and a second component comprising a second polyol, preferably having a number average molecular weight of at least about 2,000 Daltons, more preferably at least about 4,000 Daltons, even more preferably at least about 8,000 Daltons and most preferably more than 10,000 Daltons.

A constituent of the two-component polyurethane adhesive composition comprises a flame retardant package, wherein the flame retardant package comprises no more than about 20 wt% of the composition, preferably no more than about 15 wt%, more preferably no more than about 10 wt%. The flame retardant package includes a liquid phosphate ester, based on the weight of the composition, the liquid phosphate ester comprises no more than about 15 wt% of the two-component polyurethane adhesive composition, preferably less than about 10 wt%, more preferably no more than about 5 wt%, further preferably no more than about 4 wt%, even more preferred no more than about 3 wt%, preferably the liquid phosphate ester comprises a polymer. The flame retardant package also includes a solid ammonium polyphosphate, said solid ammonium polyphosphate comprising "n" number of ammonium phosphate units wherein "n" comprises at least about 500, further preferably at least about 750, more preferably at least about 1000, even more preferably at least about 1500.

The two-component adhesive composition may optionally include a silane adhesion promoter selected from the group comprising an isocyanurato silane adhesion promoter, an isocyanato silane adhesion promoter and combinations thereof, a concentration of the silane adhesion promoter comprises about 0.1 to about 10 wt% of the two-component polyurethane adhesive composition, (non-limiting example of the isocyanurato silane: 1,3,5-tris[3-(trimethoxysilyl)propyl]-1,3,5-triazine-2,4,6(1H,3H,SH)-trione). Another optional component may include an epoxy functional silane adhesion promoter, which may be included in the two-component adhesive composition in an amount of at least 0.5 wt% up to about 20 wt% of the two-component polyurethane adhesive composition. The various types of silane adhesion promoters listed herein may be used in any combination thereof.

16A. Alternatively the two-component adhesive composition may include less than 0.1 wt% of the isocyanurato silane adhesion promoter, the isocyanato silane adhesion promoter and combinations thereof, preferably less than about 0.05 wt%, more preferably no more than trace amounts and/or less than 0.5 wt% of the epoxy functional silane adhesion promoter, preferably no more than trace amounts of the epoxy functional silane adhesion promoter. Preferred properties of the cured two-component polyurethane adhesive may include one or more of the following: preferably (1) a tensile strength of the adhesive comprises at least about 1 MPa, more preferably at least about 5 MPa, even more preferably at least about 7 MPa, even more preferably at least about 10 MPa; (2) Young's modulus of at least about 1 MPa, (3) an NCO to OH index of at least about 80 to about 130, preferably at least about 100, more preferably at least about 110 and further preferably not more than about 125; and (4) combinations thereof.

17. The adhesive composition of clause 16 or 16A may further include a tertiary amine, preferably the tertiary amine comprises at least one of: 1,4-Diazabicyclo[2.2.2]octane solution, DBU (diazabicycloundecene), 1,4-diazabicyclooctane and combinations thereof.

18. The two component adhesive composition of any one of clauses 16, 16A or 17 wherein a number average molecular weight of the second polyol comprises at least about 10,000 Daltons, preferably at least about 20,000 Daltons, more preferably at least about 35,000 Daltons, even more preferably at least about 50,000 Daltons and most preferably at least about 80,000 Daltons.

19. An engineered wood composite comprising any one of the polyurethane adhesive compositions of any one of clauses 1-18 and a plurality of wood based materials, preferred examples of the wood based materials include wood chips, wood strains, sawdust, particles of wood and combinations thereof, more preferred the engineered wood composite having a three-dimensional shape, further preferred the three-dimensional shape comprises one of a board, a sheet, or a plank.

20. A laminate comprising 2 structural wood substrates and the cured polyurethane adhesive composition of any one of clauses 1-18 adhering the 2 structural wood substrates together.

21. The laminate of clause 20 wherein a material of construction of at least one, preferably both, substate(s) comprises one of a wood particle board, wood chipboard, wood-oriented strand board, waferboard, wood fiberboard, parallel strand lumber, laminated strand lumber, plywood, laminated veneer lumber, straw particle board or straw fiberboard, optionally the first substrate and the second substrate comprise the same material of construction, or preferably the first substrate and the second substrate comprise the different material of construction.

22. The laminate of any one of clauses 20 or 21 further comprising a primer, preferably the primer comprises an ammonium phosphate, more preferably an ammonium dihydrogen phosphate.

23. A method of bonding a first substrate and a second substrate, comprising:
(i) providing a first substrate having at least one surface and a second substrate having at least one surface, wherein the first substrate is a wood based substrate and the second substrate comprises a wood based substrate or a non-wood based substrate,
(ii) applying the adhesive composition of any one of clauses 1-18 to the surface of one of the first substrate or to the second substrates or to both the first and second substrates,
(iii) contacting the composition bearing first substrate, second substrate or both the first substrate and the second substrates for bonding; and
(vi) curing the adhesive composition at a pressure of at least about 15 psi, preferably up to about 300 psi, more preferably up to about 250 psi, further preferably up to about 200 psi, and for a time period of at least about 5 min.

24. The method of clause 23 further comprising applying a primer to the surface of the first substrate or the second substrate, prior to applying the adhesive composition, wherein the primer comprises at least one of water, preferably in the form of a mist, ammonium phosphate, preferably ammonium dihydrogen phosphate, and combinations thereof.

25. The polyurethane adhesive composition of any one of clauses 1, 2 or 4-15 wherein the polyisocyanate component comprises a polymeric methylene diisocyanate (pMDI) having an isomer ratio of 4, 4' to 2, 4' of at least about 2:1, preferably at least about 3:1, more preferably at least about 4:1, even more preferably at least about 6:1, further preferably at least about 8:1, further more preferably at least about 10:1 and even further preferably at least about 12:1. An upper limit of the ratio may comprises up to about 20:1.

26. The two-component adhesive composition of any one of clauses 16-18 wherein the isocyanate compound comprises a polymeric methylene diisocyanate (pMDI) having an isomer ratio of 4, 4' to 2, 4' of at least about 2:1, preferably at least about 3:1, more preferably at least about 4:1, even more preferably at least about 6:1, further preferably at least about 8:1, further more preferably at least about 10:1 and even further preferably at least about 12:1. An upper limit of the ratio may comprises up to about 20:1.

The contents of provisional patent application having the number US 63/447668 and filed 23 February 2023, are incorporated herein by reference as if fully rewritten.

The aforementioned description regarding the properties of adhesive and the alternate adhesive are equally applicable to the second alternate embodiment and are incorporated herein by reference as if fully rewritten.

All the embodiments described above can be combined with each other. In particular, the various aforementioned ingredients in the composition, and in particular the preferred embodiments, can be combined with each other.

The compositions and their applications according to the present disclosure may be prepared and used according to the examples set out below. These examples are presented herein for purposes of illustration of the present disclosure and are not intended to be limiting, for example, the preparations of the compositions and their applications.

### EXAMPLES

Examples of adhesive formulations containing a flame retardant package are described below.

Base polyurethane adhesive (BPUR) formula A is synthesized using combination of polyols and polymeric methylene diisocyanate (pMDI) (aka diphenylmethane diisocyanate) having an isomer ratio of 4, 4' to 2, 4' of about 8:1 to about 12: 1 and a 20% NCO content and a polyisocyanate to polyol molar ratio of about 13.

BPUR formula B is synthesized using combination of polyols and polymeric methylene diisocyanate (pMDI) (aka diphenylmethane diisocyanate) having an isomer ratio of 4, 4' to 2, 4' of about 2:1 to 3:1 and a 20% NCO content and a polyisocyanate to polyol molar ratio of about 13.

**Table 1 Flame Retardant Packages**

| Flame Retardant Package # | Ingredient-1 & wt% of Flame Retardant Package | Ingredient-2 & wt% of Flame Retardant Package | Ingredient-3 & wt% of Flame Retardant Package |
|---|---|---|---|
| FR-1 (Control-1) | 100% Pur Guard 9606 | - | - |
| FR-2 (Control-2) | 100% Ammonium Polyphosphate type II | - | - |
| FR-3 (Control-3) | 100% Zinc Borate anhydrous | - | - |
| FR-4 (Invention-1) | 50% Pur Guard 9606 | 50% Ammonium Polyphosphate type II | - |
| FR-5 (Control-4) | 50% Pur Guard 9606 | 50% Zinc Borate anhydrous | - |
| FR-6 (Control-5) | 50% Ammonium Polyphosphate type II | 50% Zinc Borate anhydrous | - |
| FR-7 (Invention-2) | 33% Pur Guard 9606 | 33% Ammonium Polyphosphate | 33% Zinc Borate anhydrous |

| | | | |
|---|---|---|---|
| Pur Guard 9606: Liquid Phosphate Ester Ammonium Polyphosphate type II: Solid Ammonium Polyphosphate having a number of ammonium phosphate units n > 1000. Zinc Borate anhydrous | | | |

Adhesive formulations were generated by combining the noted BPUR with the flame retardant package. To avoid settling of the components of the flame-retardant package, approximately 2% fumed silica was added to thicken the adhesive composition and prevent any settling. A speed mixer was used for uniform mixing of the BPUR, fumed silica and flame retardant package compositions.

In order to test fire performance of wood bonded assemblies, the CSA O177-06 Annex A.2 (Sections 2.1.7 and 3.7 of ANSI 405) test protocol was used for assembly and testing. Sample billets were assembled in CLT configuration (cross-lamination). It involved 8-ply wood assembly that were bonded with different adhesive formulations as described in Tables 1-3. Wood assemblies were made of Southern Yellow Pine with a specific gravity of 0.6.

The following ratings were adopted to rate fire performance of adhesive formulations. A total of 7 bondlines per sample were tested under fire and a total 3 samples were evaluated (a total of 21 bondlines tested per adhesive formulation) for each adhesive composition.

**Table 2. Fire performance of adhesive formulation containing flame retardant package**

| Adhesive formulation | BPUR | FR package | Rating |
|---|---|---|---|
| AF1 | A | 5% FR-1 | 5 |
| AF2 | A | 5% FR-2 | 3 |
| AF3 | A | 5% FR-3 | 5 |
| AF4 (Invention) | A | 5% FR-4 | 1 |
| AF5 | A | 5% FR-5 | 5 |
| AF6 | A | 5% FR-6 | 4 |

| | | | |
|---|---|---|---|
| 1 = Barely any bondlines open under fire 5 = Bondlines are completely open under fire | | | |

As noted in Table 2, adhesive formulation that contained combination of liquid phosphate ester and ammonium polyphosphate type II (solid ammonium polyphosphate) showed the best fire performance compared to formulations that were either standalone liquid phosphate ester or standalone ammonium polyphosphate type II.

**Table 3. Fire performance of adhesive formulations containing flame retardant package**

| Adhesive formulation | BPUR | FR package | Rating |
|---|---|---|---|
| AF7 | A | FR-7 | 1 |
| AF8 | B | FR-7 | 3 |

Table 3 demonstrated that BPUR composition that has higher 4,4' MDI isomer showed better fire performance than one with relatively lower 4,4' MDI isomer distribution.

While this invention has been described in detail with reference to certain preferred embodiments, it should be appreciated that the present disclosure is not limited to those precise embodiments. Rather, in view of the present disclosure, many modifications and variations would present themselves to those skilled in the art without departing from the scope and spirit of this invention.

## Claims

1. A polyurethane adhesive composition comprising a flame retardant package, wherein the flame retardant package comprises no more than about 20 wt% of the polyurethane adhesive composition, preferably no more than about 15 wt%, more preferably no more than about 10 wt%,
the flame retardant package comprises
a. a liquid phosphate ester, based on the weight of the polyurethane adhesive composition, the liquid phosphate ester comprises no more than about 15 wt%, preferably less than about 10 wt%, more preferably no more than about 5 wt%, further preferably no more than about 4 wt%, even more preferred no more than about 3 wt%, and
b. a solid ammonium polyphosphate, said solid ammonium polyphosphate comprising "n" number of ammonium phosphate units wherein "n" comprises at least about 500, further preferably at least about 750, more preferably at least about 1000, even more preferably at least about 1500, and
wherein the polyurethane adhesive composition comprises a polyisocyanate component and a polyol component and a molar ratio of the polyisocyanate component to the polyol component comprises more than about 1:1, preferably at least about 2: 1, further preferably at least about 5:1, even more preferably at least about 10:1, and most preferably up to about 20:1.

2. The polyurethane adhesive composition of claim 1 wherein the liquid phosphate ester comprises a polymer.

3. The polyurethane adhesive composition of claim 1 or claim 2 wherein the polyisocyanate component of the adhesive composition comprises polymeric diphenylmethane diisocyanate (polymeric (MDI)), the polymeric (MDI) comprises more than about 35 wt% of the polyisocyanate component, preferably at least about 40 wt%, more preferably up to about 50 wt%, or about 35 wt% to about 75 wt%, more preferably about 60 wt% to less than about 75%, and/or preferably a monomeric content of MDI comprises less than about 45 wt% of the polyisocyanate component, more preferably less than about 40 wt%, further preferably less than about 35 wt%, even more further preferably less than about 30 wt%.

4. The polyurethane adhesive composition of any one of the preceding claims wherein the polyurethane adhesive composition has an NCO content of at least about 5%, preferably at least about 10%, more preferably at least about 15%, further preferably up to about 25% and even more preferably no more than about 23%.

5. The polyurethane adhesive composition of any one of the preceding claims wherein the flame retardant package further comprises an additional non-halogenated flame retardant, preferably the additional non-halogenated flame retardant comprises at least one of zinc borate, melamine polyphosphate or both.

6. The polyurethane adhesive composition of any one of the preceding claims wherein the polyurethane adhesive composition comprises less than about 1 wt% of a formaldehyde containing compound and/or a formaldehyde forming compound upon the application of heat to the cured composition, preferably less than about 0.5 wt%, more preferably less than about 0.1 wt%, further preferably no more than trace amounts, and even more preferable less than trace amounts.

7. The polyurethane adhesive composition of any one of the preceding claims wherein the flame retardant package comprises no more than about 7 wt% of the polyurethane adhesive composition, preferably no more than about 5 wt%.

8. The polyurethane adhesive composition of any one of the preceding claims, further comprising a rheology modifier, preferably the rheology modifier comprises fumed silica, further preferably an amount of the fumed silica comprises no more than about 7 wt% of the polyurethane adhesive composition, more preferably no more than about 5 wt%, even more preferably no more than about 3 wt%, most preferably at least about 1 wt%.

9. The polyurethane adhesive composition of any one of the preceding claims wherein the polyol component comprises a polyether, preferably the polyether comprises a polyol ether diol, more preferably the polyol ether diol comprises a plurality of primary diols, further preferably wherein the polyol ether diol comprises a bisphenol A component, even more preferably wherein the polyol ether diol having the bisphenol A component comprises a plurality of primary hydroxyl units.

10. The polyurethane adhesive composition of any one of the preceding claims wherein the adhesive composition comprises less than 2 wt% of a small molecule wherein the small molecule comprises at least one of tris-chloroisopropyl-phosphate (TCPP), tris(1,3-dichloroisopropyl)phosphate (TDCPP), tris-chloroethyl-phosphate (TCEP) and combinations thereof, preferably no more than 1 wt%, more preferably less than 0.5 wt%, even more preferably no more than trace amounts.

11. The polyurethane adhesive composition of anyone of the preceding claims wherein a viscosity of the polyurethane adhesive composition comprises less than about 1,000,000 cP, preferably less than about 500,000 cP, further preferably less than about 100,000 cP, more preferably less than about 50,000 cP, even more preferably no more than about 30,000 cP or preferably about 5,000 to 30,000 cP, more preferably about 6,000 to 25,000 cP, even more preferably no more than about 20,000 cP, measured with a Brookfield viscometer with a number 6 spindle at 20 rpm at room temperature (20-25°C).

12. The polyurethane adhesive composition of any one of the preceding claims wherein the polyurethane adhesive composition comprises a structural adhesive, preferably the structural adhesive comprises either a 1 component adhesive or a 2 component adhesive.

13. The polyurethane adhesive composition of any one of the preceding claims wherein the polyurethane adhesive composition comprises less than 5 wt% of a halogenated flame retardant, preferably less than about 3 wt%, more preferably less than about 1 wt%, further preferably no more than trace amounts of the halogenated flame retardant.

14. The polyurethane adhesive composition of any one of the preceding claims wherein the polyurethane adhesive composition has less than 0.1 wt%, based on the weight of the polyurethane adhesive composition, preferably less than about 0.05 wt%, more preferably no more than trace amounts, further preferably less than trace amounts, of a silane adhesion promoter selected from the group comprising an isocyanurato silane adhesion promoter, an isocyanato silane adhesion promoter and combinations thereof.

15. The polyurethane adhesive composition of any one of the preceding claims wherein the polyurethane adhesive composition has less than 0.5 wt% based on the weight of the polyurethane adhesive composition, preferably less than about 0.1 wt%, further preferably less than about 0.05 wt%, more preferably no more than trace amounts, furthermore preferably less than trace amounts of an epoxy functional silane adhesion promoter.
